# EUROPEAN PATENT SPECIFICATION

(11) **EP 4 528 656 B1**
(45) Date of publication and mention of the grant of the patent: **27.05.2026**
(21) Application number: 23923818.1
(22) Date of filing: 01.12.2023
(51) Int. Cl.: G06T 13/80, G06T 1/20, G06T 11/40, H04N 21/81

(54) **RENDERING METHOD AND ELECTRONIC DEVICE**
DARSTELLUNGSVERFAHREN UND ELEKTRONISCHE VORRICHTUNG
PROCÉDÉ DE RENDU ET DISPOSITIF ÉLECTRONIQUE

(30) Priority: 21.02.2023 CN 202310203005
(43) Date of publication of application: 26.03.2025
(73) Proprietor: Honor Device Co., Ltd., Shenzhen, Guangdong 518040 (CN)
(72) Inventor: XIA, Wenchao, Shenzhen, Guangdong 518040 (CN)
(74) Representative: Beder, Jens
(86) International application number: PCT/CN2023/135910
(87) International publication number: WO 2024/174655

(56) References cited:
- WO-A1-2022/068326
- CN-A- 106 997 610
- CN-A- 114 470 750
- US-A1- 2011 078 623
- US-A1- 2011 199 377
- NAGABHUSHAN SOMRAJ ET AL: "Temporal View Synthesis of Dynamic Scenes through 3D Object Motion Estimation with Multi-Plane Images", ARXIV.ORG, CORNELL UNIVERSITY LIBRARY, 201 OLIN LIBRARY CORNELL UNIVERSITY ITHACA, NY 14853, 19 August 2022 (2022-08-19), XP091298198

## Description

This application claims priority to Chinese Patent Application CN 118 537 467 A (Application No. 202310203005.3), filed with the China National Intellectual Property Administration on February 21, 2023 and entitled "RENDERING METHOD AND ELECTRONIC DEVICE".

### TECHNICAL FIELD

This application relates to the field of image processing, and in particular, to a rendering method, an electronic device and a computer-readable storage medium.

### BACKGROUND

With rapid development of video games, rendering procedures of game engines become increasingly complex, and resource consumption also increases. Currently, a mainstream manner is to insert one prediction frame between or after two real frames after rendering of the two adjacent real frames is completed, to reduce rendering overheads. In the conventional technology, interpolation or moving is performed on two real frames based on pixels to obtain a prediction frame.

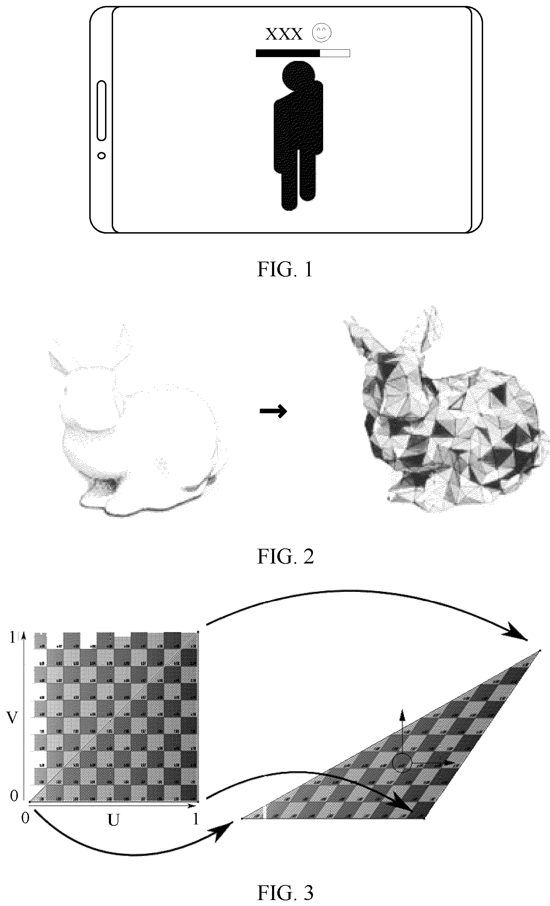

However, for a two-dimensional patch (patch) whose shape and relative coordinates of vertexes remain unchanged in an image (that is, display content remains unchanged), such as text (XXX), an icon (smile icon), or a health bar above a head of a game character in a video game shown in FIG. 1, if interpolation or moving is also performed based on pixels, the patch is blurred in a prediction frame and clear in a real frame (that is, jitter occurs). Consequently, a user can clearly perceive a difference between the prediction frame and the real frame, and user experience is greatly reduced.

In the publication "Temporal View Synthesis of Dynamic Scenes through 3D Object Motion Estimation with Multi-Plane Images" of Nagabhushan Somraj et al (CORNELL UNIVERSITY LIBRARY, 201 OLIN LIBRARY CORNELL UNIVERSITY ITHACA, NY 14853, ARXIV.ORG, 19 August 2022) a framework for temporal view synthesis of dynamic scenes in the context of causal frame-rate upsampling of videos is proposed.

US 2011/078623 A1 discusses video content-aware advertisement placement, whereby computer-readable media and computerized methods for utilizing an awareness of video content within a media file to incorporate an advertisement therein are provided.

### SUMMARY

Embodiments of this application provide a rendering method, an electronic device, and a computer-readable storage medium, to reduce jitter of display content in a two-dimensional patch in a prediction frame.

The invention is defined in the independent claims. Advantageous features of the present invention are defined in the corresponding subclaims. In the following, parts of the description and drawings referring to embodiments, which are not covered by the claims, are not presented as embodiments of the invention but as examples useful for understanding the invention.

According to a first aspect, a rendering method is provided, and the method includes: obtaining rendering parameter information of a first patch in a first real frame, absolute coordinates of the first patch, rendering parameter information of a second patch in a second real frame, and absolute coordinates of the second patch, where the first real frame and the second real frame are adjacent real frames, determining, based on patch attribute information, that the first patch and the second patch are two-dimensional patches whose shapes and relative positions of vertexes remain unchanged, wherein source code of a vertex shader comprises the patch attribute information; if the rendering parameter information of the first patch is the same as the rendering parameter information of the second patch, and the absolute coordinates of the first patch and the absolute coordinates of the second patch are within a specific range, determining absolute coordinates of a target patch based on the absolute coordinates of the first patch and the absolute coordinates of the second patch, where the target patch is located in a prediction frame obtained based on the first real frame and the second real frame; and rendering the target patch based on the absolute coordinates of the target patch and the rendering parameter information, wherein the prediction frame is obtained based on the first real frame and the second real frame by performing interpolation, extrapolation or moving on pixels, wherein the interpolation, extrapolation or moving on pixels is not performed on display content of the target patch.

According to the rendering method provided in this embodiment of this application, for a two-dimensional patch whose shape and relative positions of vertexes remain unchanged (essentially, display content remains unchanged), in a process of obtaining a prediction frame based on two real frames, only a position to which this type of patch moves is predicted in the prediction frame, interpolation or moving is not performed on display content of this type of patch based on pixels, and display content in the real frame is still used as display content of this type of patch in the prediction frame. In this way, it can be ensured that this type of patch is also clear in the prediction frame, and jitter of the two-dimensional patch display content in the prediction frame is reduced.

In a possible implementation, the rendering parameter information of the first patch or the rendering parameter information of the second patch includes at least one of the following information: texture coordinates mapped to each vertex of a patch, an identifier of a program to which a patch belongs, or a quantity of vertexes of a patch. That two patches are the same means that these parameters of the two patches are the same.

In a possible implementation, source code of a vertex shader includes attribute information of a patch, and the attribute information is used to indicate that a patch is a two-dimensional patch whose shape and relative positions of vertexes remain unchanged. A manner is to determine, based on attribute information of a patch, whether the patch is a two-dimensional patch whose shape and relative positions of vertexes remain unchanged.

In a possible implementation, the determining absolute coordinates of a target patch based on the absolute coordinates of the first patch and the absolute coordinates of the second patch includes: performing smoothing processing on the absolute coordinates of the first patch and the absolute coordinates of the second patch to obtain the absolute coordinates of the target patch. In this way, in a prediction frame and a real frame, movement of a two-dimensional patch whose shape and relative positions of vertexes remain unchanged is relatively smooth.

In a possible implementation, when the prediction frame is located between the first real frame and the second real frame, the absolute coordinates P of the target patch are obtained by using the following formula: P=(P1*W1+P2*W2)/(W1+W2), where P1 is the absolute coordinates of the first patch, P2 is the absolute coordinates of the second patch, and W1 and W2 are weight coefficients. This implementation is applicable to frame interpolation.

In a possible implementation, W1 and W2 are equal. In this case, the target patch is located between the first patch and the second patch.

In a possible implementation, when the prediction frame is located after the first real frame and the second real frame, the absolute coordinates P of the target patch are obtained by using the following formula: P=P2+(P2-P1)*W, where P1 is the absolute coordinates of the first patch, P2 is the absolute coordinates of the second patch, and W is a weight coefficient. This implementation is applicable to frame extrapolation.

According to a second aspect, an electronic device is provided. The electronic device includes a processor and a memory, the memory stores instructions, and when the processor executes the instructions, the method according to the first aspect or any implementation of the first aspect is performed.

According to a third aspect, a computer-readable storage medium is provided. The computer-readable storage medium includes instructions, and when the instructions are run on an electronic device, the electronic device is enabled to perform the method according to the first aspect or any implementation of the first aspect.

According to a fourth aspect, a computer program product that includes instructions is provided. When the instructions are run on an electronic device, the electronic device is enabled to perform the method according to the first aspect or any implementation of the first aspect.

According to a fifth aspect, a chip system is provided. The chip system includes a processor, configured to support an electronic device in implementing a function in the first aspect. In a possible design, the apparatus further includes an interface circuit, and the interface circuit is configured to receive a signal from another apparatus (such as a memory), or to send a signal to another apparatus (such as a communication interface). The chip system may include a chip, and may further include another discrete device.

For technical effects of the second aspect to the fifth aspect, refer to technical effects of the first aspect or any implementation of the first aspect. Details are not described here again.

### BRIEF DESCRIPTION OF DRAWINGS

FIG. 1 is a schematic diagram of a two-dimensional patch whose shape and relative coordinates of a vertex remain unchanged according to an embodiment of this application;
FIG. 2 is a schematic diagram in which three-dimensional modeling is performed through splicing of a plurality of patches according to an embodiment of this application;
FIG. 3 is a schematic diagram of texture mapping according to an embodiment of this application;
FIG. 4 is a schematic diagram of frame interpolation and frame extrapolation according to an embodiment of this application;
FIG. 5 is a schematic diagram of a structure of an electronic device according to an embodiment of this application;
FIG. 6 is a schematic diagram of a software architecture for running an electronic device according to an embodiment of this application;
FIG. 7 is a schematic flowchart of a rendering method according to an embodiment of this application;
FIG. 8 is a schematic diagram in which a shape, relative positions of vertexes, and a viewing angle of a patch remain unchanged according to an embodiment of this application;
FIG. 9 is a schematic diagram of an absolute coordinate relationship between a target patch, a first patch, and a second patch during frame interpolation according to an embodiment of this application;
FIG. 10 is a schematic diagram of an absolute coordinate relationship between a target patch, a first patch, and a second patch during frame extrapolation according to an embodiment of this application;
FIG. 11 is a schematic flowchart of another rendering method according to an embodiment of this application;
FIG. 12 is a schematic flowchart of still another rendering method according to an embodiment of this application; and
FIG. 13 is a schematic diagram of a structure of a chip system according to an embodiment of this application.

### DESCRIPTION OF EMBODIMENTS

First, some concepts involved in this application will be described below.

In embodiments of this application, terms such as "first" and "second" are merely used for distinguishing features of the same type, and cannot be understood as an indication of relative importance, a quantity, or a sequence.

In embodiments of this application, the term "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In embodiments of this application, the terms "couple" or "connection" should be understood in a broad sense. For example, the connection may be a physically direct connection, or an indirect connection realized through an electronic device, such as a connection realized through a resistor, an inductor, a capacitor, or other electronic devices.

Graphics rendering engine: The graphics rendering engine is configured to model an object in an image to obtain a model, then render the model, for example, a color, light, and shadow are added, and finally display the model on a screen. Several currently mainstream graphics rendering engines include Open Graphics Library (Open Graphics Library, OpenGL), Metal, Vulkan, DirectX, and the like. In this application, description is made by using OpenGL as an example, but is not intended to be limited thereto.

Open Graphics Library (Open Graphics Library, OpenGL) is a cross-language and cross-platform application programming interface (application programming interface, API) for rendering two-dimensional (two dimensional, 2D) or three-dimensional (three dimensional, 3D) vector graphics. OpenGL is usually used in computer aided design (computer aided design, CAD), virtual reality (virtual reality, VR), augmented reality (augmented reality, AR), a scientific visualization program, video game development, and the like. This embodiment of this application uses a mobile phone game as an example, but is not intended to be limited thereto.

A shader (shader) is an editable program used to implement image rendering. If no special description is provided, a shader in this application is described by using an OpenGL shader as an example. The OpenGL shader includes a vertex shader (vertex shader) and a fragment shader (fragment shader). The vertex shader is mainly responsible for calculating a geometric relationship between vertexes (vertex), and the fragment shader is mainly responsible for calculating a color of a patch (for description of a patch, refer to the following description). Because the shader is editable, various image effects can be implemented without being limited by a fixed rendering pipeline of a graphics card.

The vertex shader is essentially program code, and is invoked at each vertex to process data of each vertex (for example, vertex coordinates, a normal, a color and texture coordinates). For example, the vertex shader may perform vertex coordinate transformation, texture coordinate generation and transformation, lighting, color material application, and the like. In other words, a program in a main (main) function of the vertex shader must be executed once for each vertex.

Absolute coordinates of a vertex: In OpenGL, all objects are located in 3D space, but a screen is all 2D pixels. Therefore, OpenGL converts, through a variety of transformations, 3D coordinates of a vertex into 2D coordinates that adapt to the screen, and finally projects the 2D coordinates onto the screen. Coordinates of a vertex in screen space are absolute coordinates of the vertex. An OpenGL shading language provides the following predefined variable for a vertex shader: a graphics library position variable (gl_Position) used to represent absolute coordinates of a vertex in screen space.

Absolute coordinates of a patch: Because the patch includes a plurality of vertexes, and coordinates of each vertex in the patch are maintained in an array form, in this application, an example in which coordinates of a first vertex in the array in the patch are used as the absolute coordinates of the patch is used for ease of description.

As shown in FIG. 2, three-dimensional modeling may be performed on a surface of an object through splicing of a plurality of basic shapes (for example, triangles). Each basic shape is referred to as a patch, and a model is finer as a quantity of patches increases. A fragment shader is code that is run at each pixel on each patch, is used to calculate a color of a single pixel and fill the pixel with the color, and may further perform operations such as interpolation, texture mapping, texture application, and color addition on a pixel.

Texture, texture coordinates, and texture mapping: To make an object obtained through rendering more realistic, on one hand, a surface of the object may be modeled by using a larger quantity of patches, and on the other hand, as shown in FIG. 3, coordinates of a vertex of a patch on the surface of the object may be mapped to coordinates (namely, texture coordinates) of a modeled surface of the object, so that a corresponding texture is displayed at the patch. This process is texture mapping, and texture coordinates are represented by using a UV coordinate system. This not only makes the surface of the model obtained through rendering more detailed, and is relatively convenient and efficient.

The OpenGL shader is written in the OpenGL shading language (OpenGL shading language, GLSL). Because a shader is an independent program, source code of the shader may be stored as a separate script for an application to invoke, or may be directly invoked in a form of a character string in a memory. The source code of the shader is compiled to obtain a shader object, and then a plurality of shader objects are linked together to form a shader program. A shader of a sender declares a variable A of an output type, and a shader of a receiver declares a variable A of an input type. During compilation and linking, two shaders with a same name A are linked together.

A uniform (Uniform) is a special variable in the shader program, and can be accessed and kept consistent throughout an execution process of the shader program.

A viewport (Viewport) is a rectangular area in a window that is used to display a graph.

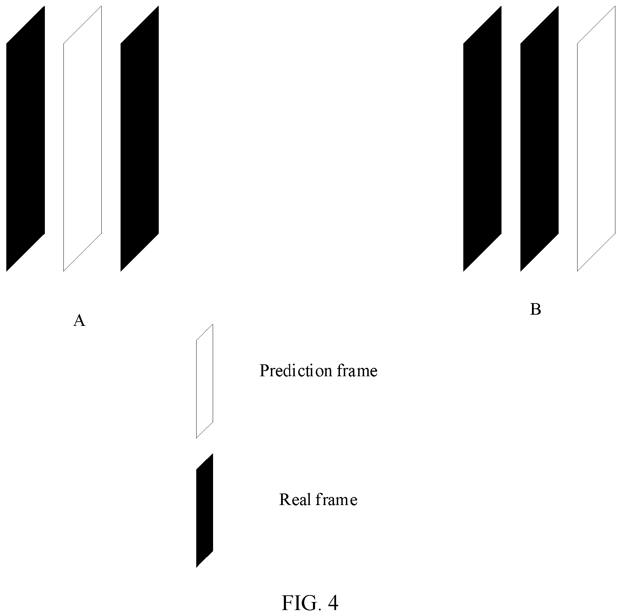

Frame insertion: As shown in FIG. 4, in the conventional technology, after two adjacent real frames are rendered, a prediction frame is inserted between the two real frames (frame interpolation shown in A in FIG. 4) or after the two real frames (frame extrapolation shown in B in FIG. 4) to reduce rendering overheads. The prediction frame is obtained by performing interpolation or moving on the two real frames based on pixels. In this process, a type of a patch is not distinguished. For a two-dimensional patch whose shape and relative positions of vertexes remain unchanged in an image, if interpolation or moving is also performed based on pixels, these patches, are blurred in the prediction frame and clear in the real frame (that is, jitter occurs), and the user can clearly perceive a difference between the prediction frame and the real frame. This greatly reduces game experience.

According to the rendering method and the electronic device provided in this embodiment of this application, for a two-dimensional patch whose shape and relative positions of vertexes remain unchanged (that is, display content remains unchanged), only a position to which this type of patch moves is predicted in a prediction frame, and interpolation or moving is not performed on display content of this type of patch based on pixels, and display content in a real frame is still used as display content in the prediction frame. In this way, it can be ensured that these patches are also clear in the prediction frame, and jitter of the two-dimensional patch display content in the prediction frame is reduced. The rendering method not only may be applied to a video game (for example, a mobile phone game), but also may be applied to a CAD, a VR, an AR, a scientific visualization program, and the like.

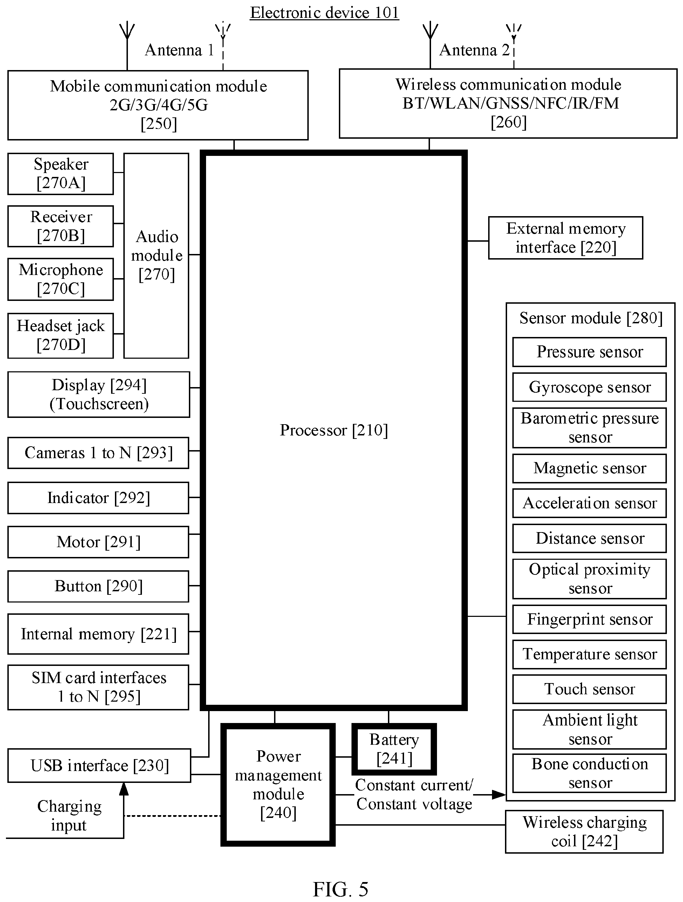

As shown in FIG. 5, an electronic device 101 provided in an embodiment of this application may be a device with a display function, and the electronic device 101 may be mobile or fixed. The electronic device 101 may be deployed on land (for example, indoor or outdoor, or handheld or vehicle-mounted); or may be deployed on a water surface (for example, a ship); or may alternatively be deployed in the air (for example, an airplane). The electronic device 101 may be referred to as user equipment (user equipment, UE), an access terminal, a terminal unit, a subscriber unit (subscriber unit), a terminal station, a mobile station (mobile station, MS), a mobile console, a terminal agent, or a terminal apparatus. For example, the electronic device may be a mobile phone, a tablet computer, a notebook computer, a virtual reality device, augmented reality device, or the like. A specific type and structure and the like of the electronic device are not limited in this embodiment of this application. A possible structure of the electronic device is described below.

For example, the electronic device is a mobile phone. The electronic device 101 may include a processor 210, an external memory interface 220, an internal memory 221, a universal serial bus (universal serial bus, USB) interface 230, a power management module 240, a battery 241, a wireless charging coil 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display screen 294, a subscriber identification module (subscriber identification module, SIM) card interface 295, and the like.

The sensor module 280 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that a schematic structure in this embodiment of the present invention does not constitute a specific limitation on the electronic device 101. In some other embodiments of this application, the electronic device 101 may include more or fewer components than those shown in the figure, or some components may be combined, or some components may be split, or there may be a different component arrangement. The components shown in the figure may be implemented by hardware, software, or a combination of software and hardware.

The processor 210 may include one or more processing units. For example, the processor 210 may be a field programmable gate array (field programmable gate array, FPGA), an application specific integrated circuit (application specific integrated circuit, ASIC), a system on chip (system on chip, SoC), a central processing unit (central processing unit, CPU), an application processor (application processor, AP), a network processor (network processor, NP), a digital signal processor (digital signal processor, DSP), a micro controller unit (micro controller unit, MCU), a programmable logic device (programmable logic device, PLD), a modulation and demodulation processor, a graphics processing unit (graphics processing unit, GPU), an image signal processor (image signal processor, ISP), a controller, a video codec, a baseband processor, a neural-network processing unit (neural-network processing unit, NPU), or the like. Different processing units may be independent devices, or may be integrated into one or more processors. For example, the processor 210 may be the application processor AP. Alternatively, the processor 210 may be integrated in a system on chip (system on chip, SoC). Alternatively, the processor 210 may be integrated in an integrated circuit (integrated circuit, IC) chip. The processor 210 may include an analog front end (analog front end, AFE) and a micro-controller unit (micro-controller unit, MCU) in an IC chip. The processor 210 may be a nerve center and a command center of the electronic device 101. The processor 210 may generate an operation control signal based on instruction operation code and a timing signal, to implement control on instruction fetching and execution.

A memory configured to store instructions and data may be further disposed in the processor 210. In some embodiments, the memory in the processor 210 is a cache memory. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a USB interface.

It may be understood that an interface connection relationship between the modules illustrated in this embodiment of the present invention is merely an example for description, and does not constitute a limitation on a structure of the electronic device 101. In some other embodiments of this application, the electronic device 101 may alternatively use an interface connection manner different from that in the foregoing embodiment, or use a combination of a plurality of interface connection manners.

The power management module 240 is configured to receive a charging input from a charger. The charger may be a wireless charger (such as a wireless charging dock of the electronic device 101 or other devices that can charge the electronic device 101 wirelessly), or a wired charger. For example, the power management module 240 may receive a charging input from the wired charger by using the USB interface 230. The power management module 240 may receive a wireless charging input by using the wireless charging coil 242 of the electronic device.

The power management module 240 may supply power to the electronic device while charging the battery 241. The power management module 240 receives an input of the battery 241, and supplies power to the processor 210, the internal memory 221, the external memory interface 220, the display 294, the camera 293, the wireless communication module 260, and the like. The power management module 240 may be further configured to monitor parameters such as a battery capacity, a battery cycle count, a battery health status (electric leakage or impedance) of the battery 241. In some other embodiments, the power management module 240 may alternatively be provided in the processor 210.

The wireless communication function of the electronic device 101 may be implemented by using the antenna 1, the antenna 2, the mobile communication module 250, the wireless communication module 260, the modulation and demodulation processor, the baseband processor, and the like.

The antenna 1 and the antenna 2 are configured to transmit and receive an electromagnetic wave signal. Each antenna in the electronic device 101 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that includes 2G/3G/4G/5G or the like and that is applied to the electronic device 101. The wireless communication module 260 may provide a solution to wireless communication including wireless local area network (wireless local area networks, WLAN) (for example, wireless fidelity (wireless fidelity, Wi-Fi) network), Bluetooth (Bluetooth, BT), and global navigation satellite system (global navigation satellite system, GNSS), frequency modulation (frequency modulation, FM), near field communication (near field communication, NFC) technology, infrared (infrared, IR) technology, and the like applied to the electronic device 101. In some embodiments, the antenna 1 and the mobile communication module 250 of the electronic device 101 are coupled, and the antenna 2 and the wireless communication module 260 are coupled, so that the electronic device 101 can communicate with networks and another device through a wireless communication technology.

The electronic device 101 may implement a display function through the GPU, the display 294, the application processor, and the like. The GPU is a microprocessor for image processing, and is connected to the display 294 and the application processor. The GPU is configured to perform mathematical and geometric computation, and is configured for GPU rendering. The processor 210 may include one or more GPUs that execute program instructions to generate or change display information.

The display 294 is configured to display an image, a video, or the like. The display 294 includes a display panel. In some embodiments, the electronic device 101 may include one or N displays 294. N is a positive integer greater than 1.

The electronic device 101 can implement a photographing function by using the ISP, the camera 293, the video codec, the GPU, the display 294, the application processor, and the like. The ISP is configured to process data fed back by the camera 293. In some embodiments, the ISP may be disposed in the camera 293. The camera 293 is configured to capture a static image or a video. In some embodiments, the electronic device 101 may include one or N camera 293, and N is a positive integer greater than 1. For example, the camera in this embodiment of this application includes a wide-angle camera and a main camera.

The external memory interface 220 may be configured to connect to an external storage card, for example, a micro SanDisk (micro SanDisk, Micro SD) card, to expand a storage capability of the electronic device 101. The external storage card communicates with the processor 210 through the external memory interface 220 to implement a data storage function. For example, files such as music and videos are stored in the external storage card.

The internal memory 221 may be configured to store computer-executable program code. The executable program code includes instructions. The processor 210 runs the instructions stored in the internal memory 221, to execute various function applications and data processing of the electronic device 101. In addition, the internal memory 221 may include a high-speed random access memory, or may include a nonvolatile memory, for example, at least one magnetic disk storage device, a flash memory, or a universal flash storage (universal flash storage, UFS).

The memory in this embodiment of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in this specification include but are not limited to these and any memory of another proper type.

The electronic device 101 can implement an audio function by using the audio module 270, the speaker 270A, the receiver 270B, the microphone 270C, the headset jack 270D, the application processor, and the like, such as music playing or sound recording.

The audio module 270 is configured to convert digital audio information into an analog audio signal for output, and is also configured to convert analog audio input into a digital audio signal. In some embodiments, the audio module 270 may be disposed in the processor 210, or some functional modules in the audio module 270 are disposed in the processor 210. The speaker 270A, also referred to as a "horn", is configured to convert an audio electrical signal into a sound signal. The receiver 270B, also referred to as an "earpiece", is configured to convert an audio electrical signal into a sound signal. The microphone 270C, also referred to as a "mike" or a "mic", is configured to convert a sound signal into an electrical signal. At least one microphone 270C may be disposed in the electronic device 101. The headset jack 270D is configured to connect to a wired headset. The headset jack 270D may be a USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 290 includes a power button, a volume button, or the like. The button 290 may be a mechanical button, or may be a touch button. The electronic device 101 may receive a button input, and generate a button signal input related to user setting and function control of the electronic device 101. The motor 291 may generate a vibration prompt. The motor 291 may be configured to provide an incoming call vibration prompt and a touch vibration feedback. The indicator 292 may be an indicator light, and may be configured to indicate a charging status and a power change, or may be configured to indicate a message, a missed call, a notification, and the like. The SIM card interface 295 is configured to connect to a SIM card. The SIM card may be inserted into the SIM card interface 295 or removed from the SIM card interface 295, to implement contact with or separation from the electronic device 101. The electronic device 101 may support one or N SIM card interfaces. N is a positive integer greater than 1. The SIM card interface 295 can support a Nano SIM (Nano SIM) card, a Micro SIM (Micro SIM) card, an SIM card, and the like. In some embodiments, the electronic device 101 uses an embedded SIM (embedded SIM, eSIM) card. The eSIM card may be embedded in the electronic device 101 and cannot be separated from the electronic device 101.

The processor 210 or GPU performs the rendering method provided in embodiments of this application by executing the program and instructions stored in the memory 221. A program run by the processor 210 may be based on an operating system, such as an Android^{®} (Android) operating system, an Apple^{®} (iOS) operating system, or a Windows (Windows) operating system.

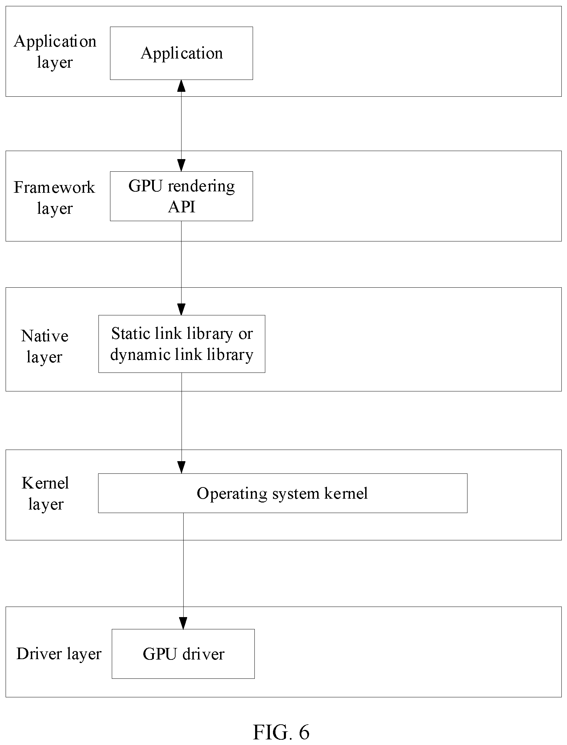

For example, the program run by the processor 210 is based on the Android^{®} operating system. As shown in FIG. 6, the program run by the processor 210 is layered based on a function, and may include an application layer, a framework layer, a native layer, a kernel layer, and a driver layer.

The application layer may include various applications on which GPU rendering needs to be performed, such as CAD, a video game, an AR/VR application, and a scientific visualization program.

The framework layer is configured to provide an application programming interface (application programming interface, API) and a system resource service to an application in the application layer, for example, a GPU rendering API. The rendering method in this application may be implemented at a framework layer on a CPU side or in the GPU. For example, implementation at the framework layer on the CPU side is used as an example for description, but is not intended to be limited thereto.

The native layer may provide a static link library or a dynamic link library for an API at the framework layer to invoke. For example, the static link library or the dynamic link library is provided to the GPU rendering API at the framework layer.

The kernel layer includes an operation system (operation system, OS) kernel (kernel). The operation system kernel is configured to manage a process, a memory, a driver, a file system, and a network system of the system.

The driver layer is configured to drive a hardware resource at the hardware layer. The driver layer may include a GPU driver.

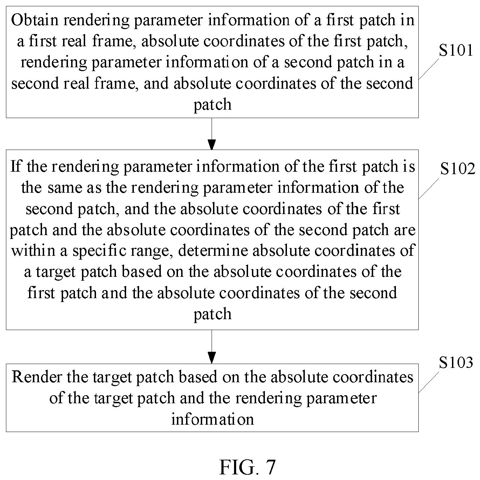

As shown in FIG. 7, for a two-dimensional patch whose shape and relative positions of vertexes remain unchanged (essentially, display content remains unchanged), a rendering method provided in this embodiment of this application includes the following steps.

S101: Obtain rendering parameter information of a first patch in a first real frame, absolute coordinates of the first patch, rendering parameter information of a second patch in a second real frame, and absolute coordinates of the second patch.

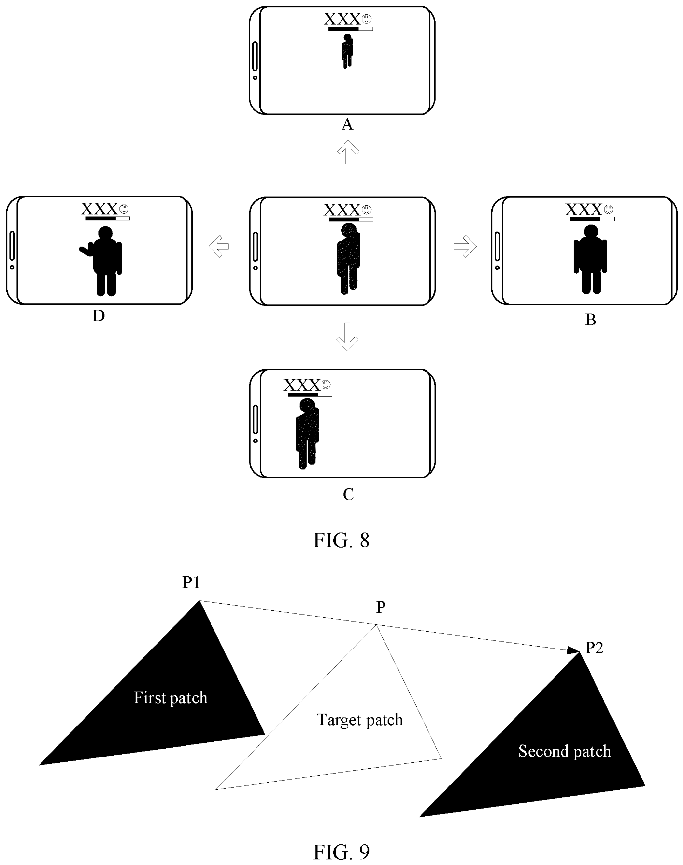

The first real frame and the second real frame are adjacent real frames, and the first patch and the second patch are two-dimensional patches whose shapes and relative positions of vertexes remain unchanged. This type of patch is referred to as a stable patch for short in the following. The relative positions of vertexes are positions of vertexes relative to other vertexes in a same patch. For example, for a patch, such as text (XXX), an icon (smile icon), or a health bar above a head of a game character in a video game shown in FIG. 8, a shape, relative positions of vertexes, and a viewing angle of the patch remain unchanged, that is, display content remains unchanged, regardless of whether the displayed game character performs near and far view scaling (A), turning around (B), moving (C), or changing a posture (D).

For absolute coordinates of a patch, refer to the foregoing description. Details are not described herein again. Rendering parameter information of a patch includes at least one of the following information: texture coordinates mapped to each vertex of the patch, an identifier of a program to which the patch belongs, or a quantity of vertexes of the patch.

Step S101 may be performed in a process of rendering a real frame.

S102: If the rendering parameter information of the first patch is the same as the rendering parameter information of the second patch, and the absolute coordinates of the first patch and the absolute coordinates of the second patch are within a specific range, determine absolute coordinates of a target patch based on the absolute coordinates of the first patch and the absolute coordinates of the second patch.

The target patch is located in a prediction frame obtained based on the first real frame and the second real frame, and describes same content (for example, same text, a same icon, and a same health bar) as the first patch and the second patch.

First, it is determined that content described by the first patch and content described by the second patch in the two adjacent real frames are the same. If texture coordinates mapped to each vertex in the first patch are the same as texture coordinates mapped to each vertex in the second patch, an identifier of a program to which the first patch belongs is the same as an identifier of a program to which the second patch belongs, and a quantity of vertexes of the first patch is the same as a quantity of vertexes of the second patch, on this basis, if a difference between the absolute coordinates P1 of the first patch and the absolute coordinates P2 of the second patch is less than a distance threshold (namely, |P1-P2|<Th), it may be determined that content described by the first patch and content described by the second patch in two adjacent real frames are the same.

In addition, the difference between the absolute coordinates P1 (namely, gl_Position) of the first patch and the absolute coordinates P2 of the second patch is a moving amount of the second patch relative to the first patch. Therefore, smoothing processing may be performed on the absolute coordinates of the first patch and the absolute coordinates of the second patch to obtain the absolute coordinates of the target patch in the prediction frame. In this way, in the prediction frame and the real frame, movement of the two-dimensional patch whose shape and relative positions of vertexes remain unchanged is relatively smooth.

For frame interpolation (that is, the prediction frame is located between the first real frame and the second real frame), as shown in FIG. 9, the absolute coordinates P of the target patch may be obtained by using the following formula: P=(P1*W1+P2*W2)/(W1+W2), where P1 is the absolute coordinates of the first patch, P2 is the absolute coordinates of the second patch, and W1 and W2 are weight coefficients. Specifically, W1 and W2 may be equal. In this case, the target patch is located between the first patch and the second patch.

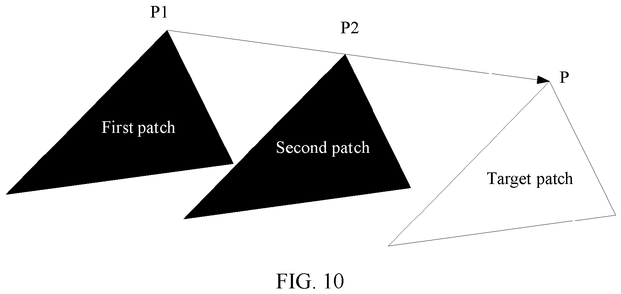

For frame extrapolation (that is, the prediction frame is located after the first real frame and the second real frame), as shown in FIG. 10, the absolute coordinates P of the target patch may be obtained by using the following formula: P=P2+(P2-P1)*W, where P1 is the absolute coordinates of the first patch, P2 is the absolute coordinates of the second patch, and W is a weight coefficient.

Step S102 may be performed in a process of rendering a real frame or may be performed in a process of rendering a prediction frame.

S103: Render the target patch based on the absolute coordinates of the target patch and the rendering parameter information.

Because the rendering parameter information of the first patch is the same as the rendering parameter information of the second patch, the same rendering parameter information is also used as the rendering parameter information of the target patch. During rendering of the target patch, the target patch is rendered based on the absolute coordinates of the target patch and the rendering parameter information, and is drawn onto a main scene of the prediction frame. In other words, at the absolute coordinates of the target patch, rendering is performed based on texture coordinates mapped to each vertex of the patch.

Step S103 may be performed in a process of rendering a real frame or may be performed in a process of rendering a prediction frame.

According to the rendering method provided in this embodiment of this application, for a two-dimensional patch whose shape and relative positions of vertexes remain unchanged (essentially, display content remains unchanged), in a process of obtaining a prediction frame based on two real frames, only a position to which this type of patch moves is predicted in the prediction frame, interpolation or moving is not performed on display content of this type of patch based on pixels, and display content in the real frame is still used as display content of this type of patch in the prediction frame. In this way, it can be ensured that this type of patch is also clear in the prediction frame, and jitter of the two-dimensional patch display content in the prediction frame is reduced.

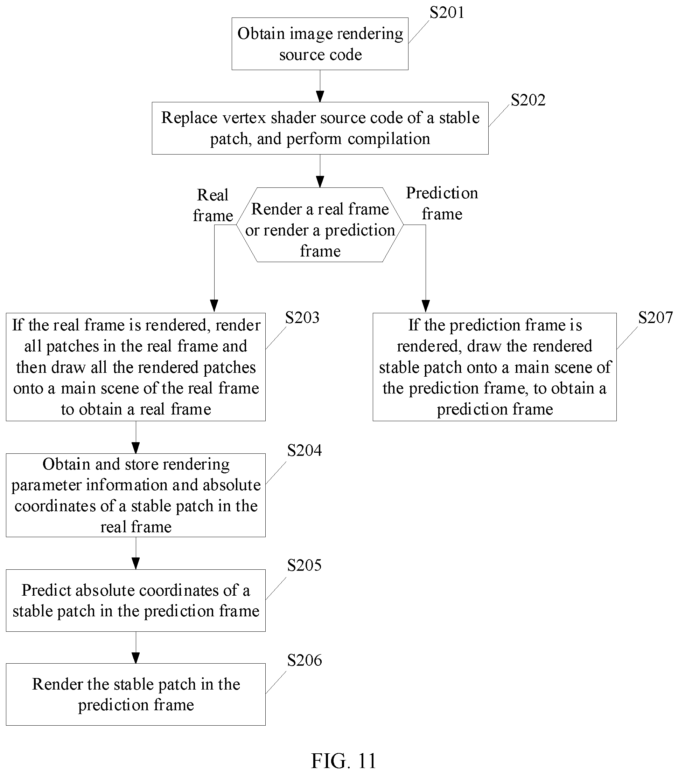

The foregoing rendering method is described below with reference to a complete rendering procedure of a real frame and a prediction frame. As shown in FIG. 11, the rendering method includes the following steps.

S201: Obtain image rendering source code.

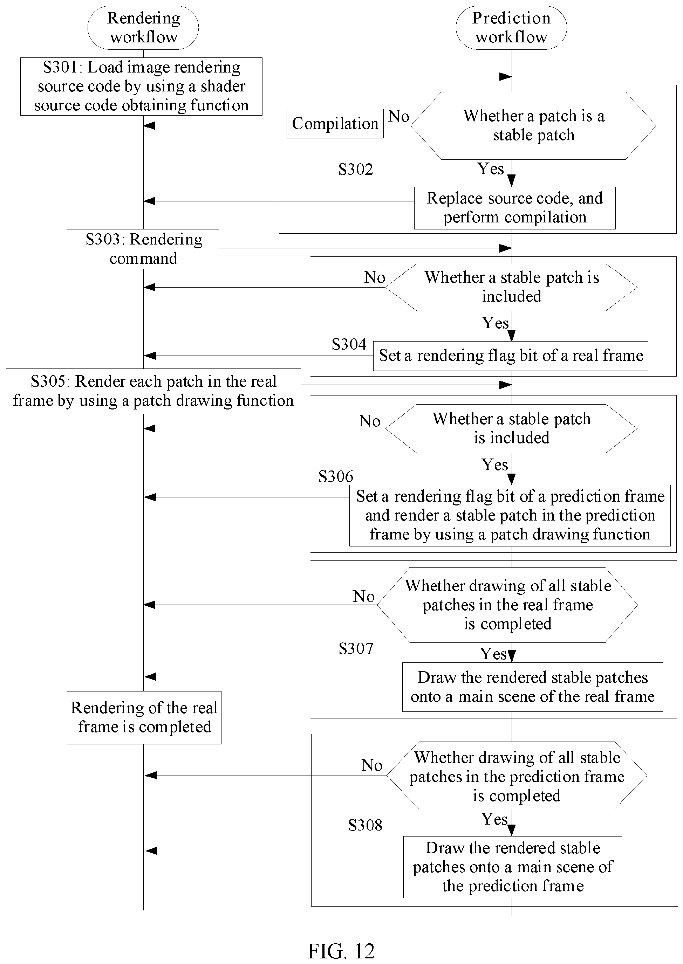

As shown in S301 in FIG. 12, in a rendering workflow, a GPU rendering API at a framework layer loads image rendering source code (which includes vertex shader source code and fragment shader source code) by using a shader source code obtaining function (glShaderSource), and information about a real frame is obtained and stored. The information about the real frame includes but is not limited to attribute information, absolute coordinates (namely, gl_Position), and rendering parameter information of each patch in the real frame. For absolute coordinates (namely, gl _Position) and rendering parameter information of the patch, refer to the foregoing description. Details are not described herein again.

The vertex shader source code includes attribute information of the patch, and the attribute information of the patch is used to indicate whether the patch is a two-dimensional patch that has no depth information (that is, the patch does not change as a viewing angle changes) and whose shape and relative positions of vertexes remain unchanged (that is, display content remains unchanged), namely, the foregoing stable patch. Therefore, when a prediction frame is obtained by performing frame insertion on two adjacent real frames, for this type of stable patch, it is unnecessary to obtain a patch in the prediction frame in a manner of performing interpolation or moving based on pixels in the conventional technology.

In an implementation, in the image rendering source code, attribute information of a patch may be set to word to indicate that text is drawn in the patch, attribute information of a patch is set to icon to indicate that an icon is drawn in the patch, attribute information of a patch is set to blood to indicate that a health bar is drawn in the patch, or the like, to indicate that the patch is a stable patch.

In another implementation, a stable patch is usually drawn only after main scene drawing of a real frame or a prediction frame is completed. Therefore, a patch indicated to be drawn after it is indicated that main scene drawing is completed in the image rendering source code is a stable patch.

S202: Replace vertex shader source code of a stable patch, and perform compilation.

As shown in S302 in FIG. 12, in a prediction workflow, first, it is determined, based on attribute information of a patch, whether each patch is a stable patch. For each stable patch, vertex shader source code of the stable patch is replaced, and compilation is performed. For another patch, compilation is performed directly.

It should be noted that, for vertex shader source code of a patch other than each stable patch in image rendering source code, modification is not performed, and compilation is still performed based on an original logic before rendering. For example, a real frame is rendered based on a rendering manner in the conventional technology, and frame insertion is performed on two adjacent real frames in a frame insertion manner in the conventional technology, to obtain a prediction frame and then render the prediction frame. Details are not described herein again in this application.

As shown in S303 in FIG. 12, an application (for example, an engine of a video game) in a CPU transmits a rendering command to the framework layer in the CPU after being started, and then the CPU transmits a DrawCall (DrawCall) command to the GPU, to indicate the GPU to perform rendering (including rendering of a real frame and a prediction frame).

S203: If the real frame is rendered, render all patches in the real frame and then draw all the rendered patches onto a main scene of the real frame to obtain a real frame.

The real frame and the prediction frame are buffered in different frame buffers (frame buffer). For example, the real frame is buffered in a first frame buffer, and the prediction frame is buffered in a second frame buffer. Alternatively, the real frame and the prediction frame are buffered in two different areas in a same frame buffer. For example, if a size of a single frame is A*B (A is a width and B is a height), the real frame may be buffered in a left half area in the frame buffer of 2A*B, and the prediction frame is buffered in a right half area in the frame buffer. Information such as rendering parameter information and absolute coordinates of each patch is stored in a data list. The data list may be located in a shader storage buffer object (shader storage buffer object, SSBO) of the GPU, and the real frame and the prediction frame are respectively bound to different SSBOs. Alternatively, the data list may be located in the CPU. This is not limited in this application.

As shown in S304 in FIG. 12, for the real frame, in the prediction workflow, a rendering flag bit of the frame is set by using a uniform (Uniform) to indicate that the frame is the real frame. In this way, in the rendering workflow, whether to render the real frame or to render the prediction frame during rendering can be distinguished.

As shown in S305 in FIG. 12, in the rendering workflow, the GPU rendering API renders each patch (including a stable patch) in the real frame by using a patch drawing function (glDrawElements). Optionally, when the real frame and the prediction frame are buffered in two different areas in a same frame buffer, a Viewport (Viewport) may further be set to indicate to render the real frame in which area (for example, a left half area).

In the real frame, rendering and drawing of each stable patch and rendering and drawing of another patch may still be performed in a manner for the original source code. This is not modified. Alternatively, as shown in S307 in FIG. 12, after rendering of all stable patches in the real frame is completed, the rendered stable patches are drawn onto the main scene of the real frame, to obtain a real frame.

In addition, the prediction frame further needs to be predicted. For another patch other than each stable patch in the real frame, a prediction frame may still be obtained in a manner of performing interpolation or moving on pixels in the conventional technology.

S204: Obtain and store rendering parameter information and absolute coordinates of the stable patch in the real frame.

For each real frame, rendering parameter information and absolute coordinates of a stable patch in the real frame are stored. For example, the rendering parameter information and the absolute coordinates of the stable patch in the real frame may be stored in a data list of the real frame.

Because a target patch in the prediction frame needs to be rendered subsequently and stable patches that describe same content in the two adjacent real frames need to be obtained first if the prediction frame needs to be rendered, it is assumed that the two adjacent real frames are a first real frame and a second real frame, and both a first patch in the first real frame and a second patch in the second real frame are stable patches.

In a process of drawing the first real frame, after a vertex shader of the first patch is run, the original source code is run to calculate vertexes of the first patch, and rendering parameter information of the first patch and absolute coordinates of the first patch in the first real frame are obtained and stored.

In a process of drawing the second real frame, after a vertex shader of the second patch is run, the original source code is run to calculate vertexes of the second patch, and rendering parameter information of the second patch and absolute coordinates of the second patch in the second real frame are obtained and stored.

This step may obtain the rendering parameter information of the first patch in the first real frame, the absolute coordinates of the first patch, the rendering parameter information of the second patch in the second real frame, and the absolute coordinates of the second patch. In other words, this step corresponds to the foregoing step S101.

S205: Predict absolute coordinates of a stable patch in the prediction frame.

In a process of drawing the second real frame, a data list of a previous real frame is traversed to search for the first patch that matches the second patch, to determine same content (for example, same text, a same icon, and a same health bar) that is described by the first patch and the second patch in the two adjacent real frames, and the same content corresponds to the target patch in the prediction frame. Specifically, if the rendering parameter information of the first patch and the rendering parameter information of the second patch are the same, and the absolute coordinates of the first patch and the absolute coordinates of the second patch are within a specific range, the same content described by the first patch and the second patch in the two adjacent real frames may be determined, and absolute coordinates of the target patch may be determined in the prediction frame. For a description of how to determine the absolute coordinates of the target patch, refer to step S102. Details are not described herein again.

This step corresponds to the foregoing step S102.

S206: Render the stable patch in the prediction frame.

Specifically, the target patch is rendered based on the absolute coordinates and the rendering parameter information of the target patch.

As shown in S306 in FIG. 12, for the prediction frame, in the prediction workflow, a rendering flag bit of the frame is set by using a uniform (Uniform) to indicate that the frame is the prediction frame. Optionally, when the real frame and the prediction frame are buffered in two different areas in a same frame buffer, a Viewport (Viewport) may further be set to indicate to render the prediction frame in an area (for example, a right half area). The stable patch in the prediction frame is rendered by using a patch drawing function (glDrawElements). In this way, in the rendering workflow, whether to render the real frame or to render the prediction frame during rendering can be distinguished.

This step corresponds to the foregoing step S103.

S207: If the prediction frame is rendered, draw the rendered stable patch onto a main scene of the prediction frame, to obtain a prediction frame.

Because rendering of the target patch is completed in the foregoing, when rendering is performed on the prediction frame, for a patch other than each stable patch, rendering is still performed in an original manner, and the rendered patch is drawn onto the main scene of the prediction frame, and then the rendered target patch is superimposed and drawn onto the main scene of the prediction frame, to obtain a complete prediction frame.

As shown in S308 in FIG. 12, in the prediction workflow, the rendered stable patch is drawn onto the main scene of the prediction frame after rendering of the main scene of the prediction frame is completed.

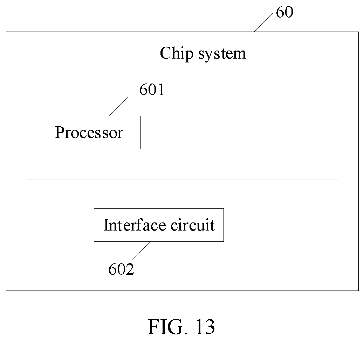

As shown in FIG. 13, an embodiment of this application further provides a chip system. The chip system 60 includes at least one processor 601 and at least one interface circuit 602. The at least one processor 601 and the at least one interface circuit 602 may be interconnected through a line. The processor 601 is configured to support an electronic device in implementing each step in the foregoing method embodiments, for example, the methods shown in FIG. 7, FIG. 11, and FIG. 12. The at least one interface circuit 602 may be configured to receive a signal from another apparatus (such as, a memory), or send a signal to another apparatus (such as, a communication interface). The chip system may include a chip, and may further include another discrete device.

An embodiment of this application further provides a computer-readable storage medium, and the computer-readable storage medium includes instructions. When the instructions are run on an electronic device, the electronic device is enabled to perform various steps in the foregoing method embodiments, such as the methods shown in FIG. 7, FIG. 11 and FIG. 12.

An embodiment of this application further provides a computer program product that includes instructions. When the instructions are run on an electronic device, the electronic device is enabled to perform various steps in the foregoing method embodiments, such as the methods shown in FIG. 7, FIG. 11 and FIG. 12.

For technical effects of the chip system, the computer-readable storage medium, and the computer program product, refer to the technical effects of the foregoing method embodiments.

It should be understood that sequence numbers of the foregoing processes do not mean execution sequences in various embodiments of this application. The performing sequences of the processes should be determined based on functions and internal logic of the processes, and should not constitute any limitation on the implementation processes of embodiments of this application.

A person of ordinary skill in the art may be aware that the example modules and algorithm steps described with reference to embodiments disclosed in this specification can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the objective of convenient and brief description, for a detailed working process of the system, apparatus, and module described above, refer to a corresponding process in the method embodiments, and details are not described herein again.

In the several embodiments provided in this application, it should be understood that the disclosed system, device and method may be implemented in other manners. For example, the described device embodiments are merely examples. For example, division of the modules is merely logical function division and there may be other division manners during actual implementation. For example, a plurality of modules or components may be combined or integrated into another device, or some features may be ignored or not performed. In addition, the displayed or discussed mutual couplings or direct couplings or communication connections may be implemented by using some interfaces. The indirect couplings or communication connections between the devices or modules may be implemented in electronic, mechanical, or other forms.

The modules described as separate parts may or may not be physically separate, and parts displayed as modules may or may not be physical modules, may be located in one device, or may be distributed on a plurality of devices. Some or all of the modules may be selected based on actual needs to achieve the objectives of the solutions of embodiments.

In addition, functional modules in embodiments of this application may be integrated into one device, or each of the modules may exist alone physically, or two or more modules may be integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. A rendering method, comprising:
obtaining (S101) rendering parameter information of a first patch in a first real frame, absolute coordinates of the first patch, rendering parameter information of a second patch in a second real frame, and absolute coordinates of the second patch, wherein the first real frame and the second real frame are adjacent real frames;
determining, based on patch attribute information, that the first patch and the second patch are two-dimensional patches whose shapes and relative positions of vertexes remain unchanged, wherein source code of a vertex shader comprises the patch attribute information;
if the rendering parameter information of the first patch is the same as the rendering parameter information of the second patch, and the absolute coordinates of the first patch and the absolute coordinates of the second patch are within a specific range, determining (S102) absolute coordinates of a target patch based on the absolute coordinates of the first patch and the absolute coordinates of the second patch, wherein the target patch is located in a prediction frame obtained based on the first real frame and the second real frame; and
rendering (S103) the target patch based on the absolute coordinates of the target patch and the rendering parameter information; wherein
the prediction frame is obtained based on the first real frame and the second real frame by performing interpolation, extrapolation or moving on pixels, wherein the interpolation, extrapolation or moving on pixels is not performed on display content of the target patch.

2. The method according to claim 1, wherein the rendering parameter information of the first patch or the rendering parameter information of the second patch comprises at least one of the following information: texture coordinates mapped to each vertex of a patch, an identifier of a program to which a patch belongs, or a quantity of vertexes of a patch.

3. The method according to claim 1 or 2, wherein when the prediction frame is located between the first real frame and the second real frame, the absolute coordinates P of the target patch are obtained by using the following formula: P=(P1*W1+P2*W2)/(W1+W2), wherein P1 is the absolute coordinates of the first patch, P2 is the absolute coordinates of the second patch, and W1 and W2 are weight coefficients.

4. The method according to claim 3, wherein W1 and W2 are equal.

5. The method according to claim 1 or 2, wherein when the prediction frame is located after the first real frame and the second real frame, the absolute coordinates P of the target patch are obtained by using the following formula: P=P2+(P2-P1)*W, wherein P1 is the absolute coordinates of the first patch, P2 is the absolute coordinates of the second patch, and W is a weight coefficient.

6. An electronic device (101), comprising a processor (210) and a memory (221), wherein the memory (221) stores instructions, and when the processor (210) executes the instructions, the method according to any one of claims 1 to 5 is performed.

7. A computer-readable storage medium, comprising instructions, wherein the instructions, when executed on an electronic device (101), cause the electronic device (101) to perform the method according to any one of claims 1 to 5.

## Patentansprüche

1. Ein Rendering-Verfahren, umfassend:
Erhalten (S101) von Rendering-Parameterinformationen eines ersten Patches in einem ersten realen Frame, absoluten Koordinaten des ersten Patches, Rendering-Parameterinformationen eines zweiten Patches in einem zweiten realen Frame und absoluten Koordinaten des zweiten Patches, wobei der erste reale Frame und der zweite reale Frame benachbarte reale Frames sind;
Bestimmen, basierend auf Patch-Attributinformationen, dass das erste Patch und das zweite Patch zweidimensionale Patches sind, deren Formen und relative Positionen der Eckpunkte unverändert bleiben, wobei der Quellcode eines Vertex-Shaders die Patch-Attributinformationen umfasst;
wenn die Rendering-Parameterinformationen des ersten Patches identisch mit den Rendering-Parameterinformationen des zweiten Patches sind und die absoluten Koordinaten des ersten Patches sowie die absoluten Koordinaten des zweiten Patches innerhalb eines spezifischen Bereichs liegen, Bestimmen (S102) von absoluten Koordinaten eines Ziel-Patches basierend auf den absoluten Koordinaten des ersten Patches und den absoluten Koordinaten des zweiten Patches, wobei sich das Ziel-Patch in einem Vorhersage-Frame befindet, der basierend auf dem ersten realen Frame und dem zweiten realen Frame erhalten wurde; und
Rendering (S103) des Ziel-Patches basierend auf den absoluten Koordinaten des Ziel-Patches und den Rendering-Parameterinformationen; wobei
der Vorhersage-Frame basierend auf dem ersten realen Frame und dem zweiten realen Frame durch Durchführen von Interpolation, Extrapolation oder Verschieben von Pixeln erhalten wird, wobei die Interpolation, Extrapolation oder das Verschieben von Pixeln nicht auf den Anzeigeinhalt des Ziel-Patches angewendet wird.

2. Das Verfahren nach Anspruch 1, wobei die Rendering-Parameterinformationen des ersten Patches oder die Rendering-Parameterinformationen des zweiten Patches mindestens eine der folgenden Informationen umfassen: Texturkoordinaten, die auf jeden Eckpunkt eines Patches abgebildet sind, eine Kennung eines Programms, zu dem ein Patch gehört, oder eine Anzahl von Eckpunkten eines Patches.

3. Das Verfahren nach Anspruch 1 oder 2, wobei, wenn sich der Vorhersage-Frame zwischen dem ersten realen Frame und dem zweiten realen Frame befindet, die absoluten Koordinaten P des Ziel-Patches unter Verwendung der folgenden Formel erhalten werden: P=(P1*W1+P2*W2)/(W1+W2), wobei P1 die absoluten Koordinaten des ersten Patches sind, P2 die absoluten Koordinaten des zweiten Patches sind und W1 sowie W2 Gewichtungskoeffizienten sind.

4. Das Verfahren nach Anspruch 3, wobei W1 und W2 gleich sind.

5. Verfahren nach Anspruch 1 oder 2, wobei, wenn der Vorhersagerahmen nach dem ersten realen Rahmen und dem zweiten realen Rahmen liegt, die absoluten Koordinaten P des Ziel-Patches unter Verwendung der folgenden Formel erhalten werden: P=P2+(P2-P1)*W, wobei P1 die absoluten Koordinaten des ersten Patches, P2 die absoluten Koordinaten des zweiten Patches und W ein Gewichtungskoeffizient ist.

6. Elektronische Vorrichtung (101), umfassend einen Prozessor (210) und einen Speicher (221), wobei der Speicher (221) Anweisungen speichert, und wenn der Prozessor (210) die Anweisungen ausführt, das Verfahren nach einem der Ansprüche 1 bis 5 durchgeführt wird.

7. Computerlesbares Speichermedium, umfassend Anweisungen, wobei die Anweisungen, wenn sie auf einer elektronischen Vorrichtung (101) ausgeführt werden, die elektronische Vorrichtung (101) dazu veranlassen, das Verfahren nach einem der Ansprüche 1 bis 5 durchzuführen.

## Revendications

1. Procédé de rendu, comprenant :
l'obtention (S101) d'informations de paramètres de rendu d'un premier patch dans une première trame réelle, de coordonnées absolues du premier patch, d'informations de paramètres de rendu d'un second patch dans une seconde trame réelle, et de coordonnées absolues du second patch, où la première trame réelle et la seconde trame réelle sont des trames réelles adjacentes ;
la détermination, sur la base d'informations d'attributs de patch, que le premier patch et le second patch sont des patchs bidimensionnels dont les formes et les positions relatives des sommets restent inchangées, où le code source d'un shader de sommets comprend les informations d'attributs de patch ;
si les informations de paramètres de rendu du premier patch sont identiques aux informations de paramètres de rendu du second patch, et que les coordonnées absolues du premier patch et les coordonnées absolues du second patch sont dans une plage spécifique, la détermination (S102) des coordonnées absolues d'un patch cible sur la base des coordonnées absolues du premier patch et des coordonnées absolues du second patch, où le patch cible est situé dans une trame de prédiction obtenue sur la base de la première trame réelle et de la seconde trame réelle ; et
le rendu (S103) du patch cible sur la base des coordonnées absolues du patch cible et des informations de paramètres de rendu ; dans lequel
la trame de prédiction est obtenue sur la base de la première trame réelle et de la seconde trame réelle par l'exécution d'une interpolation, d'une extrapolation ou d'un déplacement sur des pixels, où l'interpolation, l'extrapolation ou le déplacement sur les pixels n'est pas effectué sur le contenu d'affichage du patch cible.

2. Procédé selon la revendication 1, où les informations de paramètres de rendu du premier patch ou les informations de paramètres de rendu du second patch comprennent au moins l'une des informations suivantes : des coordonnées de texture mappées sur chaque sommet d'un patch, un identifiant d'un programme auquel appartient un patch, ou une quantité de sommets d'un patch.

3. Procédé selon la revendication 1 ou 2, où lorsque la trame de prédiction est située entre la première trame réelle et la seconde trame réelle, les coordonnées absolues P du patch cible sont obtenues en utilisant la formule suivante : P(P1*W1+P2*W2)/(W1+W2), où P1 sont les coordonnées absolues du premier patch, P2 sont les coordonnées absolues du second patch, et W1 et W2 sont des coefficients de pondération.

4. Procédé selon la revendication 3, où W1 et W2 sont égaux.

5. Procédé selon la revendication 1 ou 2, dans lequel, lorsque la trame de prédiction est située après la première trame réelle et la deuxième trame réelle, les coordonnées absolues P de la zone cible sont obtenues en utilisant la formule suivante : P=P2+(P2-P1)*W, où P1 représente les coordonnées absolues de la première zone, P2 représente les coordonnées absolues de la deuxième zone, et W est un coefficient de pondération.

6. Dispositif électronique (101), comprenant un processeur (210) et une mémoire (221), dans lequel la mémoire (221) stocke des instructions, et lorsque le processeur (210) exécute les instructions, le procédé selon l'une quelconque des revendications 1 à 5 est mis en œuvre.

7. Support de stockage lisible par ordinateur, comprenant des instructions, dans lequel les instructions, lorsqu'elles sont exécutées sur un dispositif électronique (101), amènent le dispositif électronique (101) à mettre en œuvre le procédé selon l'une quelconque des revendications 1 à 5.
